# FASCICULE DE BREVET EUROPEEN

(11) **EP 1 468 123 B1**
(45) Date de publication et mention de la délivrance du brevet: **03.05.2006**
(21) Numéro de dépôt: 03712263.7
(22) Date de dépôt: 20.01.2003
(51) Int. Cl.: C22B 34/32, C22B 5/04, C21B 15/02, C22B 1/244

(54) **PROCEDE DE FABRICATION D'ELEMENTS METALLIQUES DE PURETE ELEVEE TEL QUE LE CHROME**
VERFAHREN ZUR HERSTELLUNG HOCHREINER METALLE UND LEGIERUNGEN INSBES. CHROM
METHOD FOR PRODUCTION OF METALLIC ELEMENTS OF HIGH PURITY SUCH AS CHROMES

(30) Priorité: 21.01.2002 FR 0200678
(43) Date de publication de la demande: 20.10.2004
(73) Titulaire: DELACHAUX S.A., 92230 Gennevilliers (FR)
(72) Inventeur: LIEBAERT, Philippe, F-59230 Rosult (FR)
(74) Mandataire: Le Forestier, Eric
(86) Numéro de dépôt international: PCT/FR2003/000164
(87) Numéro de publication internationale: WO 2003/062479

(56) Documents cités:
- EP-A- 0 102 892
- WO-A-01/13969
- DATABASE WPI Section Ch, Week 197443 Derwent Publications Ltd., London, GB; Class M11, AN 1974-74939V XP002215605 & JP 49 040232 A (TOYOTA JIDOSHA KK), 15 avril 1974 (1974-04-15)

## Description

L'invention concerne un procédé de fabrication de métaux ou d'alliages métalliques de pureté élevée, en particulier de chrome métallique.

Les industries exigent de plus en plus de métaux et d'alliages métalliques de pureté élevée pour la fabrication de pièces métalliques.

La demanderesse a décrit dans le document EP-0 102 892 un procédé permettant de fabriquer différents métaux et alliages, notamment du chrome, avec une pureté élevée. Ce procédé comprend des étapes consistant à :
a) élaborer un métal ou un alliage métallique dont les inclusions non métalliques sont essentiellement des oxydes du métal de base,
b) broyer le métal ou l'alliage métallique ainsi obtenu et agglomérer le métal ou l'alliage métallique broyé avec un agglomérant et un agent réducteur pour former des boulets, et
c) soumettre les boulets à un traitement réducteur sous vide dans des conditions réglées de pression et de température pour que l'agent réducteur réagisse sur les inclusions non métalliques et qu'il n'y ait pas de sublimation substantielle du métal ou des métaux de l'alliage traités.

Ce procédé permet par exemple d'obtenir sans difficulté un produit contenant au plus 300 à 400 ppm d'oxygène total sous forme de 200 à 300 ppm d'alumine environ contenant 100 à 150 ppm d'oxygène et environ 500 ppm au maximum d'oxyde de chrome non réduit contenant environ 150 ppm d'oxygène. Il s'agit par conséquent d'un chrome de pureté élevée qui permet d'élaborer des super-alliages utilisables en particulier dans la fabrication des parties nobles des turbo-moteurs aéronautiques.

Ce procédé a donné et donne encore toute satisfaction.

Toutefois, il existe aujourd'hui une demande pour des métaux et alliages métalliques de pureté encore plus élevée.

Un but de l'invention est donc de fournir des métaux et alliages métalliques de pureté améliorée.

A cet effet, on prévoit selon l'invention un procédé de fabrication d'éléments en métal ou en alliage métallique, comprenant les étapes consistant à :
- élaborer un métal ou un alliage métallique ayant des inclusions non métalliques comprenant essentiellement des oxydes du métal de base ;
- agglomérer le métal ou l'alliage avec un réducteur pour former des éléments ;
- traiter les éléments sous vide pour que le réducteur réagisse sur les inclusions ; et
- éliminer une couche de surface des éléments.

La demanderesse a en effet constaté de façon surprenante que l'élimination de la couche superficielle accroissait la pureté d'ensemble des éléments. Ce résultat apparaît paradoxal puisque l'élimination superficielle ne peut pas avoir d'effet sur la composition du coeur des éléments. Cependant, il peut s'expliquer par le fait que la concentration en impuretés est plus élevée à la périphérie de l'élément qu'en son centre. L'élimination superficielle emporterait donc une plus forte proportion des impuretés. Il s'avère ainsi que cette étape d'élimination, notamment par tribofinition, se révèle techniquement très avantageuse. En outre, elle permet d'améliorer l'aspect du produit.

Le procédé selon l'invention pourra en outre présenter au moins l'une quelconque des caractéristiques suivantes :
- l'élimination comprend une abrasion,
- le procédé comprend une tribofinition,
- l'élimination est effectuée au moyen d'une enceinte vibrante,
- la couche éliminée a une épaisseur comprise entre 0,01 et 0,5 mm,
- le métal est choisi parmi le chrome, le titane, le vanadium, le molybdène, le manganèse, le niobium, le tungstène, et le nickel, et l'alliage comprend l'un au moins des métaux précédents et/ou le bore,
- l'alliage est un ferroalliage,
- l'étape d'élaboration met en oeuvre une réaction aluminothermique entre au moins un oxyde métallique et de l'aluminium divisé,
- la réaction est déséquilibrée par un défaut en aluminium par rapport à la quantité d'aluminium nécessaire à une réaction complète pour faire en sorte que le métal ou l'alliage contienne des inclusions non métalliques réductibles constituées principalement par des inclusions de l'oxyde métallique de base,
- après l'agglomération, les éléments sont étuvés, notamment à une température comprise entre 200 et 230°C,
- on réalise le traitement réducteur dans un four à vide, et
- après le traitement réducteur, on refroidit le produit en atmosphère neutre.

D'autres caractéristiques et avantages de l'invention apparaîtront encore dans la description suivante d'un mode préféré de mise en oeuvre.

Dans cet exemple, il s'agit de fabriquer du chrome métallique de pureté élevée par une réaction aluminothermique déséquilibrée. Elle met en oeuvre principalement les quatre étapes a), b), c) et d) suivantes.

### Etape a)

On introduit dans un creuset aluminothermique, garni d'une matière réfractaire, de l'oxyde de chrome (Cr₂O₃) du bichromate de potassium (K₂Cr₂O₇) et de l'aluminium divisé. L'oxyde de chrome est avantageusement un produit du commerce ayant une granulométrie comprise entre 0 et 15 µm, tandis que l'aluminium divisé et le bichromate de potassium sont constitués par des grains inférieurs à 1 mm.

L'oxyde de chrome et le bichromate de potassium sont présents dans les proportions stoechiométriques de la réaction aluminothermique, tandis que l'aluminium est présent avec un défaut par rapport à la proportion stoechiométrique de la réaction aluminothermique classique. Ce défaut d'aluminium peut représenter de 0,5 à 8 % en poids, de préférence de 2 à 5 % en poids, de la quantité stoechiométrique.

Ces trois constituants sont pesés et mélangés soigneusement puis la réaction est initiée dans le creuset de façon appropriée. La température de la réaction atteint rapidement une valeur d'environ 2200°C et, à l'issue de la réaction, on recueille le métal au fond du creuset, et un laitier surnageant.

### Etape b)

Le chrome métallique provenant de l'étape a) est broyé dans un broyeur à chocs constitué avantageusement par un broyeur à haute énergie du type à marteaux (marteaux mobiles contre marteaux fixes) jusqu'à obtention d'une poudre fine passant entièrement à travers un tamis de 500 µm et ne passant pas à travers un tamis de 77 µm.

Dans le présente exemple, le broyage est un broyage épurant qui produit une ventilation, c'est-à-dire un certain débit d'air de balayage. Le débit d'air peut être réglé volontairement pour accentuer, si on le désire, l'effet épurateur. De même, cet effet épurateur peut être complété par l'élimination par tamisage ou toute autre séparation sélective des particules les plus fines du produit broyé où se retrouvent concentrées la quasi totalité des inclusions non métalliques libérées par le broyage.

La poudre de chrome épurée ainsi obtenue est ensuite mélangée intimement avec un réducteur et un agglomérant. Ce dernier est avantageusement constitué par un mélange de bakélite et d'un liant organique tel que le furfuraldéhyde. Celui-ci a pour but de faciliter l'agglomération à froid, la bakélite dissoute dans le liant formant colle à froid, ainsi que la polymérisation ultérieure de la bakélite à chaud. Bien entendu, on peut utiliser d'autres agglomérants thermodurcissables et d'autres solvants. Le réducteur, quant à lui, est avantageusement constitué par du noir de carbone venant en complément du carbone de la bakélite.

Les quantités respectives de ces produits sont variables mais sont globalement ajustées, avec un léger excès, à la teneur résiduelle en oxygène du produit broyé. A titre d'exemple, le mélange réducteur/agglomérant peut être constitué de 0,1 % de bakélite, 0,3 % de furfuraldéhyde et de 0,05 à 0,2 % de noir de carbone, ces pourcentages étant rapportés au poids du produit broyé.

Le mélange obtenu est mis en forme de boulets ou de pastilles au moyen d'une presse à compacter classique, telle qu'une presse à bouleter à roues tangentes ou une presse à pastiller. Après agglomération, le mélange est étuvé à la température adéquate (200 à 230°C environ) pour éliminer le liant organique et polymériser la bakélite qui forme liant et donne de la tenue aux boulets ou aux pastilles.

Il faut cependant remarquer que la température d'étuvage doit être limitée au minimum nécessaire afin d'éviter toute oxydation du produit.

### Etape c)

Les boulets ou pastilles obtenus à l'étape précédente sont alors soumis à un traitement réducteur à 1100°-1400°C, sous vide poussé de l'ordre de 133.10⁻⁴ Pa.

Au début du cycle de chauffage sous vide, la bakélite se décompose à une certaine température en laissant un squelette carboné qui s'ajoute au noir de carbone introduit comme réducteur dans le mélange. Une fois arrivé à la température de traitement, ce carbone réagit sur l'oxygène du Cr₂O₃ restant dans le produit mais pratiquement pas sur l'oxygène de l'alumine Al₂O₃.

On ramène le vide dans le four de traitement à 133.10⁻⁴ Pa par balayage contrôlé par un gaz non oxydant ou réducteur, tel que l'hydrogène, qui a pour particularité de n'être pratiquement pas soluble dans le chrome solide.

Du fait des vides relativement faibles et des températures relativement basses imposées par la sublimation du chrome, le traitement peut demander plusieurs heures pour atteindre une réaction quasiment complète.

### Etape d)

Au cours de cette étape ultérieure, on élimine par abrasion légère une couche superficielle des boulets. Cette étape est mise en oeuvre en l'espèce par tribofinition. Pour cela on utilise une machine de tribonifition constituée d'un bol revêtu, qui est mis en vibration par l'intermédiaire de moteurs à balourd. Sous l'effet des vibrations, les boulets s'érodent les uns contre les autres.

La tribofinition dure 10 minutes environ. La couche abrasée a une épaisseur située entre 0,01 et 0,5 mm.

Non seulement cette étape contribue à améliorer l'esthétique des boulets par effet de polissage, mais en outre elle élimine une grande quantité d'impuretés.

Les impuretés éliminées sont principalement O₂, N₂.

La demanderesse s'est livré à des expériences sur 30 paires d'échantillons de boulets de chrome. Elle a mesuré la teneur générale en atomes d'oxygène, d'azote et de carbone dans un échantillon de chaque paire n'ayant pas subi la tribofinition. Elle a fait les mêmes mesures sur l'autre échantillon de chaque paire après tribofinition de ce dernier. Les résultats sont résumés dans le tableau suivant.

| | O | N | C | |
|---|---|---|---|---|
| Avant tribofinition | 391 | 36 | 184 | (1) |
| Après tribofinition | 360 | 30 | 180 | (2) |
| Différence | 31 | 6 | 4 | (3) |

Dans ce tableau, « O », « N » et « C » représentent les atomes d'oxygène, d'azote et de carbone.

Les valeurs indiquées mesurent la qualité des composants en partie par million.

Les lignes (1) et (2) donnent des valeurs moyennes sur les échantillons respectivement sans et avec tribofinition. La ligne (3) donne la différence entre les lignes (1) et (2).

On voit que le gain en moyenne est de 31 ppm sur l'oxygène (soit 8%), et de 7 ppm sur l'azote (soit 16%). En revanche, il est plus faible sur le carbone.

L'étape de tribofinition permet donc d'accroître la pureté des boulets.

Bien entendu, l'invention n'est pas limitée au mode de réalisation préféré décrit ci-dessus.

Ainsi, l'étape a) peut être conduite autrement que par aluminothermie, par exemple par silicothermie ou bien par réduction au four électrique, pour obtenir un métal ou un alliage comprenant des inclusions non métalliques oxydées du métal de base.

Pour la silicothermie, on peut citer, à titre d'exemples non limitatifs, la fabrication de ferrochrome ou de chrome métal par réduction avec du silicium métal ou du silicio-chrome, ainsi que la fabrication de ferro-tungstène ou de ferro-molybdène par réduction avec un ferro-silicium à haute teneur ou du silicium métal.

Pour la réduction au four électrique, on peut citer, à titre d'exemple non limitatif, la fabrication de ferro-vanadium au four électrique, suivie d'une aluminothermie.

L'étape d'élimination peut être mise en oeuvre par d'autres moyens que la tribofinition, par exemple par polissage, émerissage, microbillage, ou sablage.

De même l'étape a) peut être conduite autrement que par aluminothermie, par exemple par silicothermie ou bien par réduction au four électrique, pour obtenir un métal ou un alliage comprenant des inclusions non métalliques oxydées du métal de base.

## Revendications

1. Procédé de fabrication d'éléments en métal ou en alliage métallique, **caractérisé en ce qu'**il comprend les étapes consistant à :
- élaborer un métal ou un alliage métallique ayant des inclusions non métalliques comprenant essentiellement des oxydes du métal de base ;
- broyer le métal ou l'alliage métallique ainsi obtenu et agglomérer le métal ou l'alliage avec un réducteur pour former des éléments ;
- traiter les éléments sous vide pour que le réducteur réagisse sur les inclusions ; et
- éliminer une couche de surface des éléments.

2. Procédé selon la revendication 1, **caractérisé en ce que** l'élimination comprend une abrasion.

3. Procédé selon l'une quelconque des revendications 1 ou 2, **caractérisé en ce qu'**il comprend une tribofinition.

4. Procédé selon l'une quelconque des revendications 1 à 3, **caractérisé en ce que** l'élimination est effectuée au moyen d'une enceinte vibrante.

5. Procédé selon l'une quelconque des revendications 1 à 4, **caractérisé en ce** la couche éliminée a une épaisseur comprise entre 0,01 et 0,5 mm.

6. Procédé selon l'une quelconque des revendications 1 à 5, **caractérisé en ce que** le métal est choisi parmi le chrome, le titane, le vanadium, le molybdène, le manganèse, le niobium, le tungstène, et le nickel et que l'alliage comprend l'un au moins des métaux précédents et/ou le bore.

7. Procédé selon l'une quelconque des revendications 1 à 5, **caractérisé en ce que** l'alliage est un ferroalliage.

8. Procédé selon l'une quelconque des revendications 1 à 7, **caractérisé en ce que** l'étape d'élaboration met en oeuvre une réaction aluminothermique entre au moins un oxyde métallique et de l'aluminium divisé.

9. Procédé selon la revendication 8, **caractérisé en ce que** la réaction est déséquilibrée par un défaut en aluminium par rapport à la quantité d'aluminium nécessaire à une réaction complète pour faire en sorte que le métal ou l'alliage contienne des inclusions non métalliques réductibles constituées principalement par des inclusions de l'oxyde métallique de base.

10. Procédé selon l'une quelconque des revendications 1 à 9, **caractérisé en ce que**, après l'agglomération, les éléments sont étuvés, notamment à une température comprise entre 200 et 230°C.

11. Procédé selon l'une quelconque des revendications 1 à 10, **caractérisé en ce qu'**on réalise le traitement réducteur dans un four à vide.

12. Procédé selon l'une quelconque des revendications 1 à 11, **caractérisé en ce que**, après le traitement réducteur, on refroidit le produit en atmosphère neutre.

## Claims

1. A method of producing metal or metal alloy granules, **characterized in that** it comprises the steps consisting in:
preparing a metal or a metal alloy having non-metallic inclusions essentially comprising oxides of the base metal;
grinding the resulting metal or metal alloy and pelletizing the metal or the alloy with a reducing agent in order to form the granules;
processing the granules in a vacuum so that the reducing agent reacts on the inclusions; and
eliminating a surface layer from the granules.

2. A method according to claim 1, **characterized in that** elimination comprises abrasion.

3. A method according to claim 1 or claim 2, **characterized in that** it includes tribofinishing.

4. A method according to any one of claims 1 to 3, **characterized in that** elimination is performed by means of a vibrating enclosure.

5. A method according to any one of claims 1 to 4, **characterized in that** the thickness of the eliminated layer lies in the range 0.1 mm to 0.5 mm.

6. A method according to any one of claims 1 to 5, **characterized in that** the metal is selected from chromium, titanium, vanadium, molybdenum, manganese, niobium, tungsten, and nickel, and the alloy comprises at least one of the above metals and/or boron.

7. A method according to any one of claims 1 to 5, **characterized in that** the alloy is a ferro-alloy.

8. A method according to any one of claims 1 to 7, **characterized in that** the preparation step makes use of an aluminothermic reaction between at least one metal oxide and divided aluminum.

9. A method according to claim 8, **characterized in that** the reaction is unbalanced due to a shortage of aluminum relative to the quantity of aluminum needed for a complete reaction so as to ensure that the metal or the alloy contains reducible non-metallic inclusions mainly constituted by inclusions of the oxide of the base metal.

10. A method according to any one of claims 1 to 9, **characterized in that** after pelletizing, the granules are baked, in particular at a temperature lying in the range 200°C to 230°C.

11. A method according to any one of claims 1 to 10, **characterized in that** the reducing treatment is performed in a vacuum oven.

12. A method according to any one of claims 1 to 11, **characterized in that** after the reducing treatment, the product is cooled in a neutral atmosphere.

## Patentansprüche

1. Verfahren zur Herstellung von Elementen aus Metall oder einer Metalllegierung, **dadurch gekennzeichnet, dass** es die Schritte umfasst, die bestehen aus:
- Gewinnen eines Metalls oder einer Metalllegierung mit nichtmetallischen Einschlüssen, die im Wesentlichen Oxide des Grundmetalls umfassen;
- Mahlen des so erhaltenen Metalls oder der so erhaltenen Metalllegierung und Agglomerieren des Metalls oder der Legierung mit einem Reduktionsmittel, um Elemente zu bilden;
- Behandeln der Elemente unter Vakuum, so dass das Reduktionsmittel mit den Einschlüssen reagiert;
- Beseitigen einer Oberflächenschicht der Elemente.

2. Verfahren nach Anspruch 1, **dadurch gekennzeichnet, dass** das Beseitigen ein Abschleifen umfasst.

3. Verfahren nach irgendeinem der Ansprüche 1 oder 2, **dadurch gekennzeichnet, dass** es eine Reibungsoberflächenbehandlung umfasst.

4. Verfahren nach irgendeinem der Ansprüche 1 bis 3, **dadurch gekennzeichnet, dass** die Beseitigung mittels einer vibrierenden Umhüllung bewirkt wird.

5. Verfahren nach irgendeinem der Ansprüche 1 bis 4, **dadurch gekennzeichnet, dass** die beseitigte Schicht eine Dicke zwischen 0,01 und 0,5 mm einschließlich aufweist.

6. Verfahren nach irgendeinem der Ansprüche 1 bis 5, **dadurch gekennzeichnet, dass** das Metall aus Chrom, Titan, Vanadium, Molybdän, Mangan, Niob, Wolfram und Nickel ausgewählt ist und die Legierung mindestens eines der voranstehenden Metalle und/oder Bor umfasst.

7. Verfahren nach irgendeinem der Ansprüche 1 bis 5, **dadurch gekennzeichnet, dass** die Legierung eine Eisenlegierung ist.

8. Verfahren nach irgendeinem der Ansprüche 1 bis 7, **dadurch gekennzeichnet, dass** der Schritt des Bereitstellens eine aluminothermische Reaktion zwischen mindestens einem Metalloxid und zerteiltem Aluminium verwirklicht.

9. Verfahren nach Anspruch 8, **dadurch gekennzeichnet, dass** die Reaktion durch einen Unterschuss an Aluminium, bezogen auf die Aluminiummenge, die für eine vollständige Reaktion erforderlich ist, aus dem Gleichgewicht gebracht wird, so dass bewirkt wird, dass das Metall oder die Legierung nicht-metallische reduzierbare Einschlüsse enthält, die hauptsächlich aus Einschlüssen des Grund-Metalloxids bestehen.

10. Verfahren nach irgendeinem der Ansprüche 1 bis 9, **dadurch gekennzeichnet, dass** nach der Agglomeration die Elemente in einem Ofen erhitzt werden, insbesondere bei einer Temperatur zwischen 200 und 230°C einschließlich.

11. Verfahren nach irgendeinem der Ansprüche 1 bis 10, **dadurch gekennzeichnet, dass** man die Reduktionsbehandlung in einem Vakuumofen durchführt.

12. Verfahren nach irgendeinem der Ansprüche 1 bis 11, **dadurch gekennzeichnet, dass** man das Produkt nach der Reduktionsbehandlung in neutraler Atmosphäre abkühlt.
